# EUROPEAN PATENT APPLICATION

(11) **EP 4 832 157 A1**
(43) Date of publication of application: **28.10.2026**
(21) Application number: 25793986.8
(22) Date of filing: 23.04.2025
(51) Int. Cl.: H01M 10/61, H01M 10/6556, H01M 10/6568

(54) **BATTERY APPARATUS AND ELECTRICAL DEVICE**

(30) Priority: 24.04.2024 CN 202410501046; 24.04.2024 CN 202420869133 U; 06.12.2024 CN 202423017858 U
(71) Applicant: Contemporary Amperex Technology Co., Limited, Ningde, Fujian 352100 (CN)
(72) Inventor: HOU, Yuepan, Ningde, Fujian 352100 (CN); ZHOU, Cong, Ningde, Fujian 352100 (CN)
(74) Representative: Lorenz Seidler Gossel Part. mbB
(86) International application number: PCT/CN2025/090734
(87) International publication number: WO 2025/223476

(57) **Abstract**

The present application relates to the technical field of battery heat exchange, and specifically discloses a battery apparatus (100) and an electric device (1000). The battery apparatus (100) includes a case (110), a battery cell assembly (120), and a heat exchanger (400). The battery cell assembly (120) and the heat exchanger (400) are disposed in the case (110) and are configured to exchange heat. The heat exchanger (400) includes a heat exchange tube (410), an adapter portion (420), and a manifold (430). The heat exchange tube (410) includes a plurality of heat exchange channels (411). The adapter portion (420) is sleeved over one end of the heat exchange tube (410) and is provided with a plurality of adapter channels (421). The manifold (430) is fixed to the adapter portion (420) and is provided with a collection port (431) and at least one flow guiding channel (435). The collection port (431) is in communication with at least one of the heat exchange channels (411), and at least two of the heat exchange channels (411) are in communication with each other via the flow guiding channel (435) and the adapter channel (421) to define a heat exchange loop (450) having at least one turning portion (451).

## Description

### CROSS-REFERENCE TO RELATED APPLICATION

The present application claims priority to Chinese Patent Application No. 202423017858.7 filed by Contemporary Amperex Technology Co., Limited on December 6, 2024, and to Chinese Patent Application Nos. 202410501046.5 and 202420869133.1, filed on April 24, 2024, the contents of which are incorporated herein by reference in their entirety.

### TECHNICAL FIELD

The present application relates to the technical field of battery heat exchange, and in particular, to a battery apparatus and an electric device.

### BACKGROUND

A battery apparatus, as a rechargeable power source, is increasingly widely used in daily life and industrial applications. When applied to new energy vehicles, the battery apparatus is mainly configured to provide power as a driving power source for the new energy vehicles.

To maintain the temperature of the battery apparatus within an appropriate temperature range during use, a heat exchanger is typically disposed in the battery apparatus. However, the existing heat exchangers exhibit difficult assembly, poor assembly quality, and poor heat exchange effect, affecting the operational safety of the battery apparatus and an electric device.

### SUMMARY

The present application aims to solve at least one of the technical problems existing in the prior art. Therefore, a first aspect of the present application provides a battery apparatus. The battery apparatus can reduce the assembly difficulty of a heat exchanger and improve assembly quality, and meanwhile, enhance the heat exchange effect of the heat exchanger, thereby solving the technical problems in the prior art, such as the difficult assembly of the heat exchanger, poor assembly quality thereof, and poor heat exchange effect thereof.

A second aspect of the present application provides an electric device including the battery apparatus described above.

In a first aspect, embodiments of the present application provide a battery apparatus. The battery apparatus includes: a case; a battery cell assembly, the battery cell assembly being disposed in the case; and a heat exchanger, the heat exchanger being disposed in the case, and the heat exchanger being configured to exchange heat with the battery cell assembly. The heat exchanger includes: a heat exchange tube, the heat exchange tube including a plurality of heat exchange channels; an adapter portion, the adapter portion being sleeved over one end of the heat exchange tube, and the adapter portion being provided with a plurality of adapter channels; and a manifold, the manifold being fixed to the adapter portion, and the manifold being provided with a collection port and at least one flow guiding channel, where the collection port is in communication with at least one of the heat exchange channels, and at least two of the heat exchange channels are in communication with each other via the flow guiding channel and the adapter channel to define a heat exchange loop having at least one turning portion.

In technical solutions according to the embodiments of the present application, by providing a heat exchanger and configuring the heat exchanger to include an adapter portion, the adapter portion can be used to facilitate the assembly of the manifold to the heat exchange tube, reducing the assembly difficulty between the manifold and the heat exchange tube, and thereby reducing the assembly difficulty of the heat exchanger. This is conducive to improving the assembly quality between the manifold and the heat exchange tube and reducing the risk of liquid leakage at the joint between the manifold and the heat exchange tube. Moreover, this facilitates the separate processing of the manifold and the adapter portion, thereby facilitating the use of the manifold and the adapter portion to define, in the heat exchanger, the heat exchange loop having at least one turning portion. As a result, the heat exchange effect of the heat exchanger is enhanced, and the temperature uniformity requirement of the battery apparatus is satisfied, thereby reducing the risk of thermal runaway of the battery apparatus, improving the operational safety of the battery apparatus, and extending the service life of the battery apparatus. That is, the battery apparatus according to the present application can reduce the assembly difficulty between the manifold and the heat exchange tube of the heat exchanger and improve assembly quality, and meanwhile, enhance the heat exchange effect of the heat exchanger.

In some embodiments, the plurality of adapter channels are in communication with the plurality of heat exchange channels in a one-to-one correspondence manner, and the flow guiding channel is in communication with at least two of the adapter channels in a corresponding manner, such that the at least two of the heat exchange channels are in communication with each other via the flow guiding channel to define the heat exchange loop having at least one turning portion. The forming difficulty of the heat exchange loop having the turning portion is reduced, thereby enabling at least two heat exchange channels to be connected in series, such that a heat exchange medium entering the heat exchange tube can sequentially enter the at least two heat exchange channels. This increases the residence time of the heat exchange medium in the heat exchange tube and the coverage area over the battery cell assembly, and to a certain extent, avoids a large temperature difference between an inlet and an outlet of the heat exchange loop, thereby improving the uniformity of heat exchange of the heat exchange tube, and satisfying the temperature uniformity requirements of the battery cell assembly.

In some embodiments, the adapter portion and the manifold are disposed at each of two ends of the heat exchange tube; and each manifold includes a communication channel in communication with the collection port, the flow guiding channel is independent of and not in communication with the communication channel, and each flow guiding channel is provided with two bypass holes spaced apart from each other; the communication channel of each manifold is in communication with one of the heat exchange channels via the adapter channel; and each flow guiding channel of each manifold is in communication with two of the heat exchange channels via the two bypass holes, such that the two of the heat exchange channels are in communication with each other, and the turning portion is formed between the heat exchange channel and the flow guiding channel. In this way, when the heat exchange medium is output to the collection port of one manifold, the heat exchange medium can be delivered to the communication channel via the collection port. Since the communication channel is spaced apart from the flow guiding channel and is in communication with one of the heat exchange channels via the adapter channel, the heat exchange medium delivered to the communication channel can flow into the heat exchange channel along the extension direction of the communication channel, and further flow into the flow guiding channel of another manifold along the heat exchange channel, such that the heat exchange medium entering the heat exchange tube can sequentially enter at least two heat exchange channels. This increases the residence time of the heat exchange medium in the heat exchange tube and the coverage area over the battery cell assembly, and to a certain extent, avoids a large temperature difference between the inlet and the outlet of the heat exchange loop, thereby satisfying the temperature uniformity requirements of the battery cell assembly.

In some embodiments, the adapter portion is an injection-molded member, and the manifold is fixedly connected to the adapter portion. The forming difficulty of the adapter portion is reduced, thereby enabling the manifold to be fixedly connected to the heat exchange tube via the adapter portion, reducing the assembly difficulty between the manifold and the heat exchange tube. This is conducive to improving the connection quality between the manifold and the heat exchange tube, avoiding liquid leakage, and enhancing the heat exchange effect of the heat exchanger.

In some embodiments, the heat exchange tube is a metal member, and the adapter portion is secondarily injection-molded on the heat exchange tube and integrally formed with the heat exchange tube. This achieves a mating connection between the adapter portion and the heat exchange tube, reduces the connection difficulty between the adapter portion and the heat exchange tube, and meanwhile, ensure the connection strength between the adapter portion and the heat exchange tube to a certain extent. In addition, the sealing performance and pressure resistance at the joint between the adapter portion and the heat exchange tube are enhanced, such that the adapter portion can be stably disposed at one end of the heat exchange tube, thereby facilitating a fixed connection of the manifold to the heat exchange tube via the adapter portion.

In some embodiments, the adapter portion is a plastic member. In one aspect, the adapter portion can be secondarily injection-molded on the heat exchange tube and integrally formed with the heat exchange tube, thereby reducing the connection difficulty between the adapter portion and the heat exchanger; in another aspect, the weight of the adapter portion can be reduced, and the manufacturing cost of the adapter portion can be lowered.

In some embodiments, a first region is disposed on an outer surface of the heat exchange tube, a roughness of the first region being greater than a roughness of the remaining regions, and the first region being in contact with the adapter portion. The first region can be utilized to increase the bonding force between the heat exchange tube and the adapter portion, thereby increasing the connection strength between the heat exchange tube and the adapter portion, such that the adapter portion can be stably disposed on the heat exchange tube, thus facilitating the fixed connection of the manifold to the heat exchange tube via the adapter portion.

In some embodiments, the adapter portion includes an outer sleeve ring and an adapter plate. The outer sleeve ring is sleeved over one end of the heat exchange tube, the adapter plate is disposed in the outer sleeve ring, the plurality of adapter channels extend through the adapter plate, and the outer sleeve ring and/or the adapter plate are secondarily injection-molded on the heat exchange tube. Therefore, the adapter portion is secondarily injection-molded on the heat exchange tube, thereby reducing the connection difficulty between the adapter portion and the heat exchange tube, and enhancing the sealing performance and pressure resistance at the joint between the adapter portion and the heat exchange tube.

In some embodiments, the adapter portion and the manifold are connected by welding or adhesive bonding. This can reduce the connection difficulty between the adapter portion and the manifold, and meanwhile, increase the connection strength between the adapter portion and the manifold, such that a stable connection is formed between the adapter portion and the manifold, thereby facilitating the fixed connection of the manifold to the heat exchange tube via the adapter portion, helping to enhance the sealing performance at the joint between the adapter portion and the manifold, and eliminating the need for a sealing member.

In some embodiments, the manifold is a plastic member. This reduces the weight of the manifold and lowers the manufacturing cost of the manifold, and meanwhile, facilitates the reduction of the connection difficulty between the manifold and the adapter portion.

In some embodiments, collection ports of the manifolds located at two ends of the heat exchange tube are at the same height. This facilitates connection between the collection ports at two ends of the heat exchange tube and external elements, reducing connection difficulty, thereby facilitating the delivery of the heat exchange medium toward the heat exchange tube via the collection ports or the output of the heat exchange medium from the heat exchange tube via the collection ports, such that the heat exchange medium can effectively flow in the heat exchange tube, and the heat exchange effect of the heat exchange tube is ensured to a certain extent.

In some embodiments, the battery apparatus includes a plurality of battery cell assemblies and a plurality of heat exchangers, the plurality of battery cell assemblies being arranged in a plurality of rows, and each row of battery cell assemblies being disposed between two adjacent heat exchangers.

In a second aspect, the present application provides an electric device. The electric device includes the battery apparatus described above, where the battery apparatus is configured to provide electric energy.

In the technical solutions according to the embodiments of the present application, by adopting the battery apparatus described in the above embodiments, the operating performance of the electric device can be ensured to a certain extent, the operational safety of the electric device can be improved, and the service life of the electric device can be extended.

Additional aspects and advantages of the present application become apparent from the following description or may be learned through practice of the present application.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic diagram of an electric device according to some embodiments of the present application;
FIG. 2 is an exploded view of a battery apparatus according to some embodiments of the present application;
FIG. 3 is an exploded view of a heat exchanger according to some embodiments of the present application;
FIG. 4 is a partial enlarged view of the heat exchanger in FIG. 3;
FIG. 5 is a schematic diagram of a partial structure of the heat exchanger in FIG. 3;
FIG. 6 is a top view of a heat exchanger according to some embodiments of the present application;
FIG. 7 is a cross-sectional view along line A-A in FIG. 6;
FIG. 8 is an exploded view of a heat exchanger according to some other embodiments of the present application;
FIG. 9 is an enlarged view of region I in FIG. 8;
FIG. 10 is a top view of a heat exchanger according to some other embodiments of the present application;
FIG. 11 is a cross-sectional view along line B-B in FIG. 10;
FIG. 12 is an exploded view of a partial structure of the heat exchanger in FIG. 10; and
FIG. 13 is a cross-sectional view along line C-C in FIG. 12.

### Reference numerals:

1000: electric device;
100: battery apparatus;
110: case; 113: first part; 114: second part;
120: battery cell assembly;
200: controller;
300: motor;
400: heat exchanger;
410: heat exchange tube; 411: heat exchange channel; 412: partition rib;
420: adapter portion; 421: adapter channel; 422: outer sleeve ring; 423: adapter plate;
430: manifold;
431: collection port; 433: communication channel; 434: through hole;
435: flow guiding channel; 4351: bypass hole;
450: heat exchange loop; 451: turning portion;
440: blocking member; 441: insertion slot; 442: limiting protrusion.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, of the embodiments of the present application. Based on the embodiments in the present application, all other embodiments obtained by those of ordinary skill in the art without creative efforts shall fall within the scope of protection of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the above terms in the present application can be understood based on specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are only exemplary and should not be construed as limiting the present application in any way.

The term "plurality of" used in the present application refers to two or more (including two).

At present, from the perspective of market development, the application of battery apparatuses is becoming increasingly widespread. Battery apparatuses are not only applied in energy storage power systems such as hydropower, thermal power, wind power, and solar power stations, but also widely applied in electric transportation vehicles such as electric bicycles, electric motorcycles, or electric vehicles, as well as in military equipment, aerospace, and other fields.

With the continuous expansion of application fields of battery apparatuses, the market demand for battery apparatuses is also continuously increasing.

When the battery apparatus is in operation, a large amount of heat is generated due to the discharging of positive and negative electrodes of battery cells and chemical reactions of the electrolyte inside the battery cells, resulting in an increase in the temperature of the battery cells.

In the prior art, to reduce the temperature of battery cells, a heat exchanger is usually disposed in the battery apparatus, and heat exchange between the heat exchanger and the battery cells is utilized to maintain the temperature of the battery cells within an appropriate temperature range. This ensures the operating performance of the battery cells to a certain extent, extends the service life of the battery cells, and improves the operational safety of the battery cells.

The heat exchanger generally includes a liquid inlet manifold, a liquid outlet manifold, and a heat exchange tube disposed between the liquid inlet manifold and the liquid outlet manifold. A heat exchange medium is introduced into the heat exchange tube via the liquid inlet manifold, and the heat exchange medium flows through the heat exchange tube and is discharged from the liquid outlet manifold. The heat exchange medium is a fluid, which may be a cooling medium or a heating medium. The fluid may circulate in the heat exchange tube to exchange heat with the battery cells, thereby achieving the purpose of temperature regulation of the battery apparatus.

However, the applicant has found that, in the existing heat exchange tube, a plurality of heat exchange channels are all configured to deliver the heat exchange medium in a parallel manner, resulting in a relatively large temperature difference of the heat exchange medium between the two ends of the heat exchange channels, which in turn leads to uneven heating of the battery cells and affects the heat exchange effect.

In addition, due to the presence of chamfers at the edge of the heat exchange tube, the welding difficulty between the heat exchange tube and the liquid inlet manifold, as well as the liquid outlet manifold, is increased. Moreover, direct welding increases the risk of liquid leakage. If the heat exchange tube is integrally injection-molded with the liquid inlet manifold and the liquid outlet manifold, the presence of bypass requirements inside the liquid inlet manifold and the liquid outlet manifold results in greater demolding difficulty, affecting the forming quality and forming efficiency of the heat exchanger.

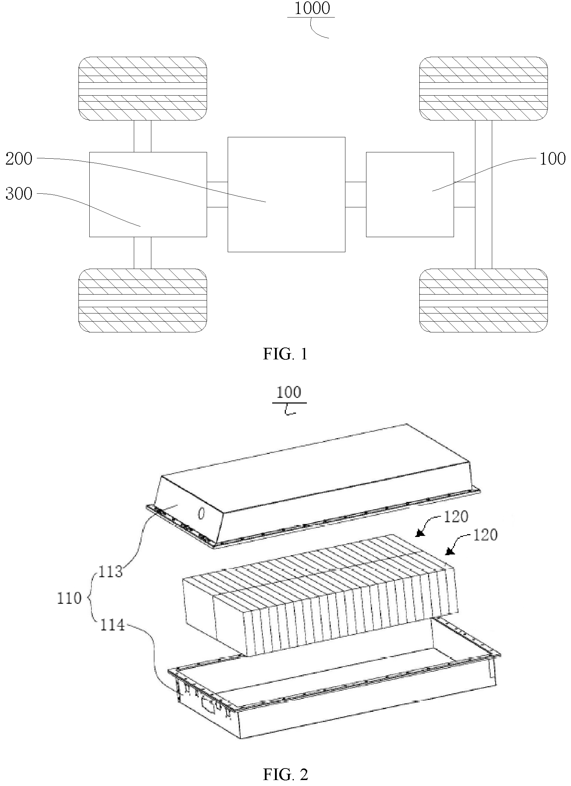

To solve the above problems, with reference to FIGs. 1 to 13, the embodiments of the present application provide a battery apparatus 100. The heat exchanger 400 in the battery apparatus 100 can reduce the assembly difficulty between the manifold 430 and the heat exchange tube 410, and meanwhile, enhance the heat exchange effect of the heat exchange tube 410. In particular, the heat exchanger 400 is configured to include a heat exchange tube 410, an adapter portion 420, and a manifold 430. The adapter portion 420 is sleeved over one end of the heat exchange tube 410, and the manifold 430 is fixed to the adapter portion 420, such that mating connection between the manifold 430 and the heat exchange tube 410 is achieved via the adapter portion 420, thereby reducing the assembly difficulty between the manifold 430 and the heat exchange tube 410 and reducing the assembly difficulty of the heat exchanger 400. Furthermore, the above connection method can further improve the fitting strength between the manifold 430 and the heat exchange tube 410 and reduce the risk of liquid leakage at the joint between the manifold 430 and the heat exchange tube 410. Moreover, after the manifold 430 is connected to the heat exchange tube 410 via the adapter portion 420, the manifold 430 can be separately molded, thereby facilitating configuration of the manifold 430 with a collection port 431 and at least one flow guiding channel 435, which facilitates the use of the manifold 430 and the adapter portion 420 to define, in the heat exchanger 410, a heat exchange loop 450 having at least one turning portion 451. As a result, the heat exchange effect of the heat exchanger 400 is enhanced, the temperature uniformity requirements of the battery cell assembly 120 are satisfied, thereby reducing the risk of thermal runaway of the battery apparatus 100, improving the operational safety of the battery apparatus 100, and extending the service life of the battery apparatus 100.

The embodiments of the present application further provide an electric device 1000 using the battery apparatus 100 of the present application as a power source. The electric device 1000 may be, but is not limited to, a mobile phone, a tablet computer, a laptop computer, an electric toy, an electric tool, an electric bicycle, an electric vehicle, a ship, a spacecraft, or the like.

The electric toy may include a stationary or mobile electric toy, such as a game console, an electric car toy, an electric ship toy, and an electric aircraft toy; the spacecraft may include an airplane, a rocket, a space shuttle, a spaceship, and the like; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer.

For ease of explanation in the following embodiments, the structures of the electric device 1000 and the battery apparatus 100 of the present application are described in detail by taking the electric device 1000 as a vehicle as an example.

Referring to FIG. 1, the electric device 1000 is a vehicle, which may be a fuel vehicle, a gas vehicle, or a new energy vehicle. The new energy vehicle may be a pure electric vehicle, a hybrid vehicle, an extended-range vehicle, or the like. The vehicle is provided with a battery apparatus 100, and the battery apparatus 100 may be disposed at the bottom, head, or tail of the vehicle. The battery apparatus 100 may be configured to supply power to the vehicle. For example, the battery apparatus 100 may serve as an operation power source of the vehicle.

As shown in FIG. 1, the vehicle may further include a controller 200 and a motor 300. The controller 200 is configured to control the battery apparatus 100 to supply power to the motor 300, e.g., for the operation power needed by the vehicle for start-up, navigation, and driving.

In some embodiments of the present application, the battery apparatus 100 may not only serve as the operation power source for the vehicle, but also as a driving power source for the vehicle to, instead of or in part instead of fuel or natural gas, provide driving power for the vehicle.

The battery apparatus 100 according to the embodiments of the present application is described below with reference to the drawings of the specification.

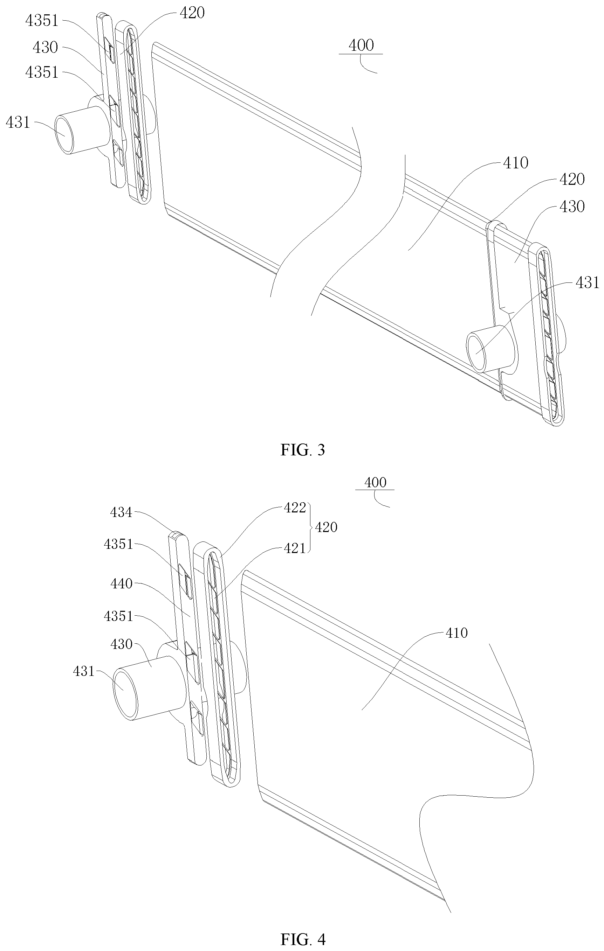

With reference to FIGs. 2 and 3, the battery apparatus 100 includes a case 110, a battery cell assembly 120, and a heat exchanger 400.

As shown in FIG. 2, the battery cell assembly 120 is disposed in the case 110. In this way, the case 110 is used to support and protect the battery cell assembly 120, thereby enhancing the structural stability of the battery cell assembly 120, extending the service life of the battery cell assembly 120, and facilitating the improvement in the operational safety of the battery cell assembly 120.

In some embodiments, as shown in FIG. 2, the case 110 may include a first part 113 and a second part 114. The first part 113 and the second part 114 lidded with each other. The first part 113 and the second part 114 jointly define an accommodating cavity for accommodating the battery cell assembly 120, and the heat exchanger 400, thereby reducing the forming difficulty of the case 110.

The first part 113 may be a hollow structure with one end open, and the second part 114 may be a plate-shaped structure. The open side of the first part 113 is lidded with the second part 114 (not shown in this exemplary drawing), such that the first part 113 and the second part 114 jointly define the accommodating cavity. Alternatively, the second part 114 may be a hollow structure with one end open, and the first part 113 may be a plate-shaped structure (not shown in this exemplary drawing). The open side of the second part 114 is lidded with the first part 113, such that the first part 113 and the second part 114 can also jointly define the accommodating cavity through cooperation. Alternatively, as shown in FIG. 2, both the first part 113 and the second part 114 are hollow structures with one side open, and the open side of the second part 114 is lidded with the open side of the first part 113 to define the accommodating cavity. The case 110 formed by the first part 113 and the second part 114 may have various shapes, such as a cylinder, a cube, or a rectangular parallelepiped.

Certainly, in some other embodiments of the present application, the battery apparatus 100 may not include the case 110, but only include the battery cell assembly 120 and the heat exchange tube 410. This is not repeated in detail herein.

The battery apparatus 100 mentioned in the embodiments of the present application refers to a single physical module including a plurality of battery cells to provide higher voltage and capacity. For example, the battery apparatus 100 mentioned in the present application may be a battery cell assembly 120, a plurality of battery cells, or the like. The battery cell assembly 120 generally includes a plurality of battery cells. The battery apparatus 100 generally includes a case 110 configured to encapsulate a plurality of battery cell assemblies 120 or a plurality of battery cells. The case 110 can, to a certain extent, prevent liquids or other foreign matter from affecting the charging or discharging of the battery cells.

It should also be noted that, in the battery apparatus 100, the plurality of battery cell assemblies 120 may be connected in series, in parallel, or in series-parallel. The series-parallel connection refers to a configuration in which both series connection and parallel connection are present for the connection among the plurality of battery cell assemblies 120. The plurality of battery cell assemblies 120 may be first directly connected in series, in parallel, or in a series-parallel connection, and then the integral structure formed by the plurality of battery cell assemblies 120 is accommodated in the case 110.

In some embodiments, as shown in FIG. 2, the battery apparatus 100 includes a plurality of groups of battery cell assemblies 120. During assembly of the battery apparatus 100, the battery apparatus 100 may be formed by first connecting a plurality of battery cells in series, in parallel, or in series-parallel to form battery cell assemblies 120, and then connecting the plurality of battery cell assemblies 120 in series, in parallel, or in series-parallel to form an integral structure, which is accommodated in the case 110.

In some embodiments, the battery apparatus 100 may further include other structures. For example, the battery apparatus 100 may further include an electric connector configured to achieve an electrical connection among the plurality of battery cell assemblies 120.

The electric connector described herein may be understood as a busbar.

In addition, FIG. 2 shows that the battery cell is formed as a rectangular parallelepiped. In other embodiments of the present application, the battery cell may also be cylindrical, polygonal prismatic, flat, or in other shapes.

In the present application, battery cells may include lithium-ion secondary batteries, lithium-ion primary batteries, lithium-sulfur batteries, sodium-lithium-ion batteries, sodium-ion batteries, magnesium-ion batteries, or the like. This is not limited in the embodiments of the present application. The battery cell may be cylindrical, flat, rectangular parallelepiped-shaped, or in other shapes. This is also not limited in the embodiments of the present application. According to the way of packaging, battery cells are generally divided into three types: cylindrical battery cells, prismatic battery cells, and pouch battery cells. This is also not limited in the embodiments of the present application.

Illustratively, a battery cell may typically include a housing, a battery cell assembly, and an electrolyte. The housing is configured to accommodate the battery cell assembly and the electrolyte, and at least one positive electrode post terminal and at least one negative electrode post terminal are disposed on the housing. The battery cell assembly includes one or a plurality of electrode assemblies, and the electrode assembly is formed by stacking or winding a positive electrode plate, a negative electrode plate, and a separator.

The positive electrode plate may typically include a positive electrode current collector and a positive electrode active substance layer. The positive electrode active substance layer is directly or indirectly applied on the positive electrode current collector. A plurality of positive electrode tabs are stacked together and electrically connected to the positive electrode post terminal. Illustratively, the plurality of positive electrode tabs stacked together may be directly welded to the positive electrode post terminal to form an electrical connection. Alternatively, the battery cell assembly may further include a positive electrode adapting piece, the plurality of positive electrode tabs stacked together are welded to one end of the positive electrode adapting piece, and the other end of the positive electrode adapting piece is welded to the positive electrode post terminal to form an electrical connection between the positive electrode tabs and the positive electrode post terminal.

The negative electrode plate may typically include a negative electrode current collector and a negative electrode active substance layer. The negative electrode active substance layer is directly or indirectly applied on the negative electrode current collector. A plurality of negative electrode tabs are stacked together and electrically connected to the negative electrode post terminal. Illustratively, the plurality of negative electrode tabs stacked together may be directly welded to the negative electrode post terminal to form an electrical connection. Alternatively, the battery cell assembly may further include a negative electrode adapting piece, the plurality of negative electrode tabs stacked together are welded to one end of the negative electrode adapting piece, and the other end of the negative electrode adapting piece is welded to the negative electrode post terminal to form an electrical connection between the negative electrode tabs and the negative electrode post terminal. The material of the separator is not limited, and may be, e.g., polypropylene or polyethylene.

The heat exchanger 400 is disposed in the case 110, and the heat exchanger 400 is configured to exchange heat with the battery cell assembly 120 to regulate the temperature of the battery cell assembly 120 by means of the heat exchange tube 410, enabling the temperature of the battery cell assembly 120 to be maintained within an appropriate temperature range. In this way, the service life of the battery cell assembly 120 is extended, and meanwhile, the operational safety of the battery cell assembly 120 can be improved.

It should be noted that the heat exchange between the heat exchanger 400 and the battery cell assembly 120 according to the embodiments of the present application may be used for cooling or heating the battery cell assembly 120. That is, the heat exchanger 400 may cool the battery cell assembly 120, or may heat the battery cell assembly 120 operating in a low-temperature environment, such that the temperature of the battery cell assembly 120 reaches an operating temperature range, enabling a normal power supply.

With reference to FIGs. 3 to 13, the heat exchanger 400 according to the embodiments of the present application includes a heat exchange tube 410, an adapter portion 420, and a manifold 430.

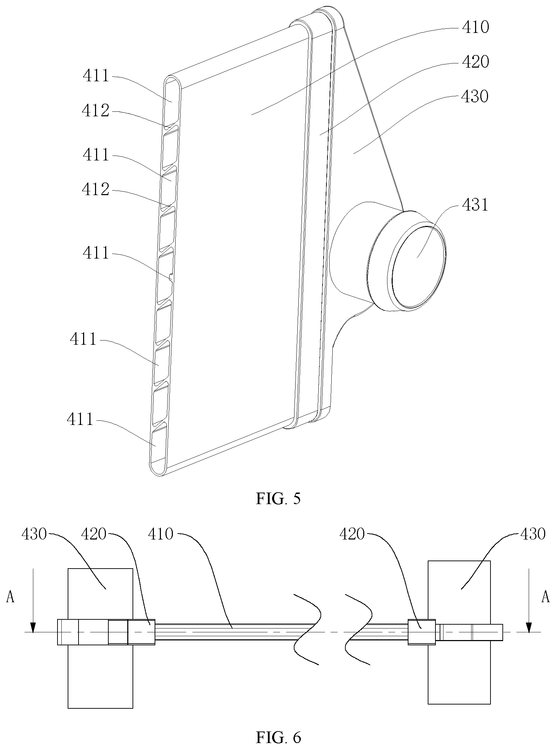

With reference to FIGs. 5, 6, and 7, the heat exchange tube 410 includes a plurality of heat exchange channels 411. The heat exchange channels 411 are mainly configured to be filled with a heat exchange medium, to facilitate heat exchange between the heat exchange tube 410 and the battery cell assembly 120, thereby regulating the temperature of the battery cell assembly 120 via the heat exchanger 400, reducing the risk of thermal runaway of the battery cell assembly 120, and ensuring the operating performance of the battery cell assembly 120 to a certain extent.

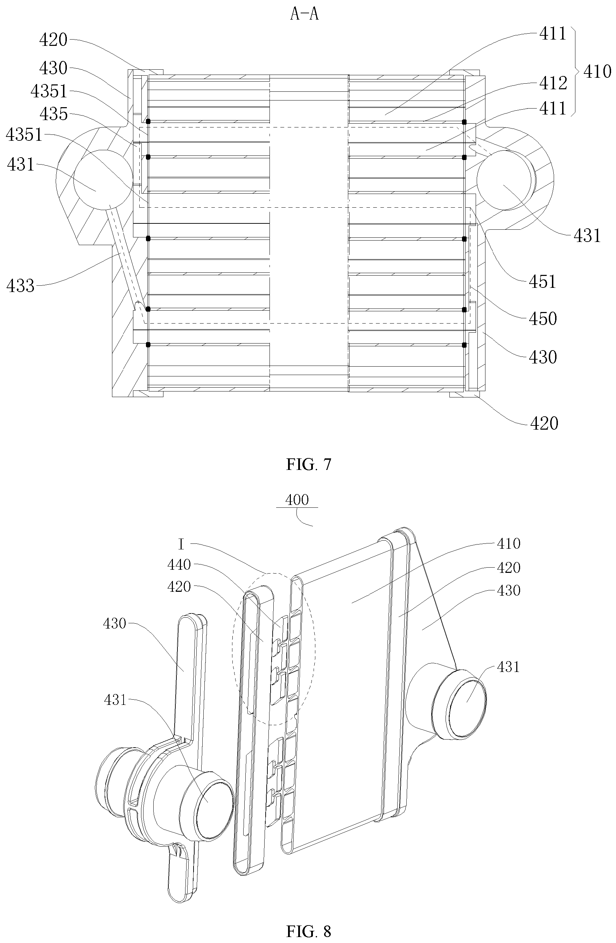

In some embodiments, as shown in FIGs. 3 and 8, the heat exchange tube 410 may be in a flat tube shape, and the cross-section of the heat exchange channel 411 may be a regular shape, such as circular, rectangular, or elliptical, or other irregular shapes.

With reference to FIGs. 3, 5, and 6, the adapter portion 420 is sleeved over one end of the heat exchange tube 410, and the adapter portion 420 is provided with a plurality of adapter channels 421.

It should be noted that, compared with abutting engagement between an end portion of the adapter portion 420 and an end portion of the heat exchange tube 410, sleeving the adapter portion 420 over one end of the heat exchange tube 410 can not only reduce the assembly difficulty between the adapter portion 420 and the heat exchange tube 410, but also increase the contact area between the adapter portion 420 and the heat exchange tube 410. This is conducive to increasing the connection strength between the adapter portion 420 and the heat exchange tube 410, thereby ensuring a stable relative position between the adapter portion 420 and the heat exchange tube 410.

In some embodiments, the plurality of adapter channels 421 are arranged in correspondence with the plurality of heat exchange channels 411. In this way, when the adapter portion 420 is sleeved over one end of the heat exchange tube 410, the plurality of adapter channels 421 can be used to facilitate delivery of a heat exchange medium toward the heat exchange channels 411, thereby ensuring the operating performance of the heat exchange tube 410 to a certain extent.

With reference to FIGs. 3, 4, 6, and 7, the manifold 430 is fixed to the adapter portion 420, and the manifold 430 is provided with a collection port 431 and at least one flow guiding channel 435. The collection port 431 is in communication with at least one of the heat exchange channels 411. At least two of the heat exchange channels 411 are in communication with each other via the flow guiding channel 435 and the adapter channel 421 to define a heat exchange loop 450 having at least one turning portion 451.

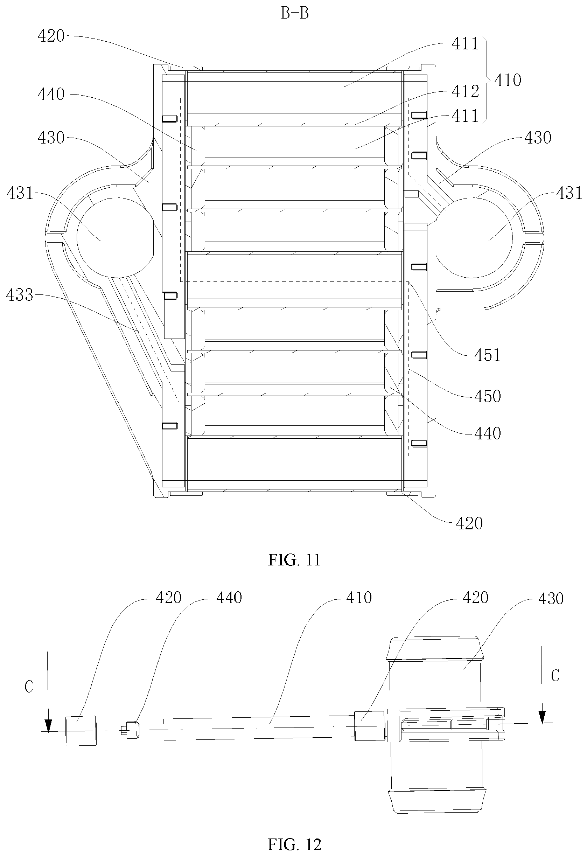

For the specific flow direction of the heat exchange medium in the heat exchange loop 450, reference may be made to the dashed line extension directions shown in FIGs. 7 and 11.

It should be noted that, by configuring the collection port 431 to be in communication with at least one heat exchange channel 411, the delivery of the heat exchange medium toward the heat exchange channel 411 is achieved, that is, the heat exchange medium can be delivered into the heat exchange tube 410. By allowing at least two heat exchange channels 411 to be in communication with each other via the flow guiding channel 435 and the adapter channel 421 to define the heat exchange loop 450 having at least one turning portion 451, the heat exchange medium entering the heat exchange tube 410 can sequentially enter the at least two heat exchange channels 411, thereby achieving a series connection of the at least two heat exchange channels 411. As a result, the residence time of the heat exchange medium in the heat exchange tube 410 and the coverage area over the battery cell assembly 120 are increased, and to a certain extent, a large temperature difference between an inlet and an outlet of the heat exchange loop 450 is avoided. Accordingly, the uniformity of heat exchange of the heat exchange tube 410 is improved, uneven heat exchange of the battery cell assembly 120 is mitigated, the temperature uniformity requirements of the battery cell assembly 120 are satisfied, thereby reducing the risk of thermal runaway of the battery apparatus 100, improving the operational safety of the battery apparatus 100, and extending the service life of the battery apparatus 100.

In some embodiments, the collection port 431 is in communication with at least one adapter channel 421. Since the adapter channel 421 is in communication with the heat exchange channel 411, the communication between the collection port 431 and at least one heat exchange channel 411 is achieved, thereby reducing the difficulty of establishing communication between the collection port 431 and the heat exchange channel 411.

It should be noted that the heat exchanger 400 according to the present application is provided with an adapter portion 420. The adapter portion 420 is sleeved over one end of the heat exchange tube 410, and the manifold 430 is fixed to the adapter portion 420, so as to achieve the fixed connection of the manifold 430 to the heat exchange tube 410 via the adapter portion 420. Compared with fixedly connecting the manifold 430 to the heat exchange tube 410 directly, this structure can reduce the assembly difficulty between the manifold 430 and the heat exchange tube 410, thereby reducing the assembly difficulty of the heat exchanger 400. This is conducive to ensuring the assembly quality between the manifold 430 and the heat exchange tube 410 and reducing the risk of liquid leakage at the joint between the manifold 430 and the heat exchange tube 410. Moreover, this facilitates the separate processing of the manifold 430 and the adapter portion 420, which facilitates the use of the manifold 430 and the adapter portion 420 to define, in the heat exchange tube 410, the heat exchange loop 450 having at least one turning portion 451, thereby enhancing the heat exchange effect of the heat exchange tube 410.

As may be seen from the above structure, in the battery apparatus 100 according to the present application, by providing the heat exchanger 400 and configuring the heat exchanger 400 to include the adapter portion 420, and by using the adapter portion 420 to assemble the manifold 430 to the heat exchange tube 410, the assembly difficulty between the manifold 430 and the heat exchange tube 410 is reduced, thereby reducing the assembly difficulty of the heat exchanger 400. This is conducive to ensuring the assembly quality between the manifold 430 and the heat exchange tube 410 and reducing the risk of liquid leakage at the joint between the manifold 430 and the heat exchange tube 410. Moreover, this facilitates the use of the manifold 430 and the adapter portion 420 to define, in the heat exchanger 410, the heat exchange loop 450 having at least one turning portion 451.

By defining the heat exchange loop 450 having at least one turning portion 451 in the heat exchange tube 410, the heat exchange medium entering the heat exchange tube 410 can sequentially enter at least two heat exchange channels 411, thereby achieving a series connection of the at least two heat exchange channels 411. As a result, the residence time of the heat exchange medium in the heat exchange tube 410 and the coverage area over the battery cell assembly 120 are increased, and to a certain extent, a large temperature difference between the inlet and the outlet of the heat exchange loop 450 is avoided, thereby improving the uniformity of heat exchange of the heat exchange tube 410, mitigating uneven heat exchange of the battery cell assembly 120, and satisfying the temperature uniformity requirements of the battery cell assembly 120.

That is, the battery apparatus 100 according to the present application can reduce the assembly difficulty between the manifold 430 and the heat exchange tube 410, while reducing the risk of liquid leakage, and facilitating the improvement in the heat exchange effect of the heat exchanger 400.

It can be understood that, compared with the prior art, in the battery apparatus 100 according to the present application, by providing the adapter portion 420 of the heat exchanger 400, the assembly difficulty between the manifold 430 and the heat exchange tube 410 is reduced, and the risk of liquid leakage can also be reduced. Moreover, this facilitates the use of the manifold 430 and the adapter portion 420 to define, in the heat exchanger 410, the heat exchange loop 450 having at least one turning portion 451, thereby enhancing the heat exchange effect of the heat exchanger 400 and ensuring the operating performance of the heat exchanger 400 to a certain extent.

In some embodiments, the manifold 430 is formed as an injection-molded member, so as to reduce the forming difficulty of the manifold 430 and improve the structural strength of the manifold 430, thereby ensuring the operating performance of the manifold 430 to a certain extent.

In some embodiments, with reference to FIGs. 3 and 4, a through hole 434 is disposed in the manifold 430, and the through hole 434 is formed as a draft hole to reduce the injection molding difficulty of the manifold 430.

In some embodiments, the plurality of heat exchange channels 411 all extend from one end to the other end of the heat exchange tube 410 in the length direction, and the manifold 430 is disposed at each of two ends of the heat exchange tube 410 in the length direction. The heat exchange medium reciprocates in the heat exchange tube 410 multiple times and is then discharged through the manifold 430.

It should be noted that the heat exchanger 400 according to the present application is configured to accommodate a heat exchange medium for regulating the temperature of the battery cell assembly 120. In the case of cooling the battery cell assembly 120, the heat exchanger 400 may accommodate a cooling medium to regulate the temperature of the battery cell assembly 120. In this case, the heat exchanger 400 may be referred to as a cooling member, a cooling system, a cooling plate, a liquid cooling plate, or the like.

The heat exchange medium described herein may be water, a refrigerant, or the like.

In addition, the heat exchanger 400 may be configured to heat the battery cell assembly 120, which is not limited in the embodiments of the present application.

In some embodiments, the plurality of adapter channels 421 are in communication with the plurality of heat exchange channels 411 in a one-to-one correspondence manner, and the flow guiding channel 435 is in communication with at least two of the adapter channels 421 in a corresponding manner, such that the at least two of the heat exchange channels 411 are in communication with each other via the flow guiding channel 435 to define the heat exchange loop 450 having at least one turning portion 451. The forming difficulty of the heat exchange loop 450 having at least one turning portion 451 is reduced, thereby enabling at least two heat exchange channels 411 to be connected in series, such that the heat exchange medium entering the heat exchange tube 410 can sequentially enter at least two heat exchange channels 411. This increases the residence time of the heat exchange medium in the heat exchange tube 410 and the coverage area over the battery cell assembly 120, and to a certain extent, avoids a large temperature difference between the inlet and the outlet of the heat exchange loop 450, thereby improving the uniformity of heat exchange of the heat exchange tube 410.

In some embodiments, with reference to FIGs. 3, 4, 6, and 7, the adapter portion 420 and the manifold 430 are disposed at each of two ends of the heat exchange tube 410. Each manifold 430 includes a communication channel 433 in communication with the collection port 431, and each flow guiding channel 435 is independent of and not in communication with the communication channel 433. Each flow guiding channel 435 is provided with two bypass holes 4351 that are spaced apart from each other. The communication channel 433 of each manifold 430 is in communication with one of the heat exchange channels 411 via the adapter channel 421. Each flow guiding channel 435 of each manifold 430 is in communication with two of the heat exchange channels 411 via the two bypass holes 4351, such that the two of the heat exchange channels 411 are in communication with each other, and the turning portion 451 is formed between the heat exchange channel 411 and the flow guiding channel 435. In this way, when the heat exchange medium is output to the collection port 431 of one manifold 430, the heat exchange medium can be delivered to the communication channel 433 via the collection port 431. Since the flow guiding channel 435 is independent of and not in communication with the communication channel 433, and the communication channel 433 is in communication with one of the heat exchange channels 411 via the adapter channel 421, the heat exchange medium delivered to the communication channel 433 can flow into the heat exchange channel 411 along the extension direction of the communication channel 433, and then flow along the extension direction of the heat exchange channel 411. In this case, the heat exchange medium may exchange heat with the battery cell assembly 120, thereby achieving the purpose of regulating the temperature of the battery cell assembly 120.

Moreover, since each flow guiding channel 435 is in communication with two of the heat exchange channels 411 via two bypass holes 4351, when the heat exchange medium flowing into the heat exchange tube 410 flows into the heat exchange channel 411 in communication with one of the bypass holes 4351, the heat exchange medium may flow into the flow guiding channel 435 via the bypass hole 4351, and then flow into another heat exchange channel 411 in communication with the other of the bypass holes 4351 via the flow guiding channel 435, such that the heat exchange medium entering the heat exchange tube 410 can sequentially enter at least two heat exchange channels 411. This increases the residence time of the heat exchange medium in the heat exchange tube 410 and the coverage area over the battery cell assembly 120, and to a certain extent, avoids a large temperature difference between the inlet and the outlet of the heat exchange loop 450, thereby improving the uniformity of heat exchange of the heat exchange tube 410.

In some embodiments, the manifolds 430 at two ends of the heat exchange tube 410 are formed as a liquid inlet manifold and a liquid outlet manifold, respectively. The liquid inlet manifold and the liquid outlet manifold each include a collection port 431, a communication channel 433 in communication with the collection port 431, and a flow guiding channel 435 spaced apart from the communication channel 433. A plurality of heat exchange channels 411 are disposed in the heat exchange tube 410, and the plurality of heat exchange channels 411 are in communication with the plurality of adapter channels 421 in a one-to-one correspondence manner. At least one heat exchange channel 411 is in communication, via the adapter portion 420, with the communication channel 433 of the liquid inlet manifold and the flow guiding channel 435 of the liquid outlet manifold. At least one heat exchange channel 411 is in communication, via the adapter portion 420, with the flow guiding channel 435 of the liquid inlet manifold and the flow guiding channel 435 of the liquid outlet manifold. In addition, at least one heat exchange channel 411 is in communication, via the adapter portion 420, with the flow guiding channel 435 of the liquid inlet manifold and the communication channel 433 of the liquid outlet manifold.

With the above configuration, when the heat exchange medium enters the liquid inlet manifold via the collection port 431 of the liquid inlet manifold, the heat exchange medium first flows along the extension direction of the communication channel 433 and flows into the heat exchange channel 411 in the heat exchange tube 410. Moreover, the heat exchange medium in the heat exchange channel 411 may flow into the flow guiding channel 435 of the liquid outlet manifold and then flow, along the flow guiding channel 435 of the liquid outlet manifold, into other heat exchange channels 411 in the heat exchange tube 410. The heat exchange medium in the heat exchange channel 411 may also flow into the flow guiding channel 435 of the liquid inlet manifold and then flow into other heat exchange channels 411 in the heat exchange tube 410 via the flow guiding channel 435. Finally, the heat exchange medium sequentially flows out via the heat exchange channel 411, the communication channel 433 of the liquid outlet manifold, and the collection port 431 of the liquid outlet manifold.

The flow direction of the heat exchange medium described above enables the heat exchange medium to sequentially enter at least three heat exchange channels 411, thereby forming the heat exchange loop 450 as an S-shaped loop (as shown in FIG. 7). This increases the residence time of the heat exchange medium in the heat exchange tube 410 and the coverage area over the battery cell assembly 120, and to a certain extent, avoids a large temperature difference between the inlet and the outlet of the heat exchange loop 450, thereby improving the uniformity of heat exchange of the heat exchange tube 410 and satisfying the temperature uniformity requirements of the battery cell assembly 120.

In some embodiments, with reference to FIGs. 5, 6, and 7, a plurality of heat exchange channels 411 are disposed in the heat exchange tube 410. At least part of the heat exchange channels 411 are in communication and configured to be filled with a heat exchange medium, while the inlets and the outlets of another part of the heat exchange channels 411 are blocked to prevent the heat exchange medium from entering. In this way, the total content of heat exchange medium in the heat exchange tube 410 is reduced, thereby reducing the weight of the heat exchange medium in the heat exchange tube 410. In addition, the heat exchange channels 411 not filled with the heat exchange medium in the heat exchange tube 410 form cavity structures, which can effectively reduce the weight of the heat exchange tube 410 itself. Therefore, the overall weight of the heat exchanger 400 is reduced, thereby achieving the purpose of reducing the weight of the battery apparatus 100, which is conducive to increasing the gravimetric energy density of the battery apparatus 100.

Moreover, with the above configuration, the capacity of the heat exchange medium in the heat exchanger 400 can be reduced without changing the contact area between the heat exchange tube 410 and the battery cell assembly 120, thereby increasing the gravimetric energy density of the battery apparatus 100.

In some embodiments, with reference to FIGs. 3, 4, 6, and 7, the heat exchanger 400 includes a blocking member 440. The blocking member 440 is disposed on the manifold 430, and the blocking member 440 is configured to block structures of the manifold 430 other than the communication channel 433 and the bypass holes 4351, so as to achieve the purpose of blocking part of the heat exchange channels 411, thereby reducing the difficulty of blocking the heat exchange channels 411.

Certainly, in some other embodiments, with reference to FIGs. 8 to 13, the blocking member 440 may be disposed between the adapter portion 420 and the heat exchange tube 410, and the blocking member 440 may be used to directly block the heat exchange channels 411, thereby reducing the difficulty of blocking the heat exchange channels 411.

It should be noted that when the blocking member 440 is disposed on the manifold 430, the blocking member 440 is provided on each of the manifolds 430 located at two opposite ends of the heat exchange tube 410. When the blocking member 440 is disposed between the adapter portion 420 and the heat exchange tube 410, the blocking member 440 is disposed at each of two opposite ends of the heat exchange tube 410, such that the heat exchange channels 411 can be effectively blocked by the blocking member 440, preventing the heat exchange medium from entering the blocked heat exchange channels 411, and effectively reducing the weight of the heat exchanger 400.

In addition, when the blocking member 440 is disposed on the manifold 430, the blocking member 440 may be integrally formed with the manifold 430, thereby eliminating the need for a mating connection between the blocking member 440 and the manifold 430, reducing the assembly difficulty of the blocking member 440, and increasing the connection strength between the blocking member 440 and the manifold 430, such that the blocking member 440 can be stably disposed on the manifold 430, thereby ensuring the operating performance of the blocking member 440 to a certain extent. When the blocking member 440 is disposed in the heat exchange tube 410, the manifold 430 may be formed by an injection molding process, reducing the forming difficulty of the manifold 430 and facilitating improvement in the structural stability of the manifold 430, thereby ensuring the operating performance of the manifold 430 to a certain extent.

In some embodiments, the adapter portion 420 is connected to the blocking member 440 and the heat exchange tube 410. That is, when the adapter portion 420 is disposed at one end of the heat exchange tube 410, the adapter portion 420 is connected to both the blocking member 440 and the heat exchange tube 410, such that the blocking member 440 and the heat exchange tube 410 cooperate to jointly support the adapter portion 420, thereby improving the positional stability of the adapter portion 420 and ensuring the operating performance of the adapter portion 420 to a certain extent.

Moreover, by connecting the adapter portion 420 to the blocking member 440, the adapter portion 420 can further support the blocking member 440, thereby improving the positional stability of the blocking member 440 and enhancing the blocking effect of the blocking member 440.

In a specific example, when the blocking member 440 is disposed between the adapter portion 420 and the heat exchange tube 410, during assembly of the heat exchange tube 410, the blocking member 440 may first be disposed in the heat exchange channel 411 (for example, the blocking member 440 is driven by means of an external driving member and the blocking member 440 is pushed into the heat exchange channel 411), so as to achieve a mating connection between the blocking member 440 and the heat exchange channel 411. After the assembly of the blocking member 440 and the heat exchange channel 411 is completed, the adapter portion 420 is then connected to the blocking member 440 and the heat exchange tube 410, so as to achieve fixed connections among the adapter portion 420, the blocking member 440, and the heat exchange tube 410. When the blocking member 440 is disposed on the manifold 430, during assembly of the heat exchanger 400, the blocking member 440 may first be disposed on the manifold 430, where the blocking member 440 and the manifold 430 may be connected by welding, bonding, or integral molding. After the assembly of the blocking member 440 and the manifold 430 is completed, the adapter portion 420 is then connected to the blocking member 440 and the heat exchange tube 410, so as to achieve fixed connections among the adapter portion 420, the blocking member 440, and the heat exchange tube 410.

In some embodiments, the adapter portion 420 is an injection-molded member, and the manifold 430 is fixedly connected to the adapter portion 420. By configuring the adapter portion 420 as an injection-molded member, the forming difficulty of the adapter portion 420 can be reduced while improving the structural strength of the adapter portion 420, thereby ensuring the operating performance of the adapter portion 420 to a certain extent.

Moreover, fixedly connecting the manifold 430 to the adapter portion 420 facilitates the fixed connection of the manifold 430 to the heat exchange tube 410 via the adapter portion 420, reducing the assembly difficulty between the manifold 430 and the heat exchange tube 410, thereby reducing the assembly difficulty of the heat exchanger 400, and ensuring the connection quality between the manifold 430 and the heat exchange tube 410 to a certain extent.

In some embodiments, the adapter portion 420 and the manifold 430 are connected by welding or adhesive bonding. This means that the adapter portion 420 and the manifold 430 may be fixedly connected by welding or adhesive bonding. The above connection methods not only reduce the connection difficulty between the adapter portion 420 and the manifold 430, but also increase the connection strength between the adapter portion 420 and the manifold 430, such that a stable connection is formed between the adapter portion 420 and the manifold 430, thereby facilitating the fixed connection of the manifold 430 to the heat exchange tube 410 via the adapter portion 420.

The welding described herein may be laser welding, infrared welding, or the like.

Certainly, in some other embodiments, the adapter portion 420 and the manifold 430 may also be formed by injection molding.

In some embodiments, an end portion of the adapter portion 420 may directly abut against an end portion of the manifold 430 facing the adapter portion 420. After the abutting engagement, the adapter portion 420 and the manifold 430 may be further connected by welding or adhesive bonding, thereby achieving a fixed connection therebetween.

It should be noted that, by forming a fixed connection between the adapter portion 420 and the manifold 430 through welding or adhesive bonding, as compared with snap-fit connection, the sealing performance at the joint between the adapter portion 420 and the manifold 430 can be enhanced, thereby avoiding, to a certain extent, the need for a sealing member between the adapter portion 420 and the manifold 430, reducing the cost of the heat exchanger 400, and reducing the dimension of the heat exchanger 400. Therefore, the dimension of the manifold 430 in the thickness direction is reduced, which is suitable for solutions involving thinner battery cell assemblies 120.

In a specific example, with reference to FIGs. 6 and 7, one end of the adapter portion 420 is sleeved over one end of the heat exchange tube 410, and the other end of the adapter portion 420 is sleeved over an end of the manifold 430 facing the adapter portion 420, so as to achieve fixed connections among the adapter portion 420, the heat exchange tube 410, and the manifold 430, thereby reducing connection difficulty and improving connection quality.

In some embodiments, the manifold 430 is a plastic member. That is, the manifold 430 is made of a plastic material, which is conducive to making the material of the manifold 430 the same as the material of the adapter portion 420, thereby facilitating the fixed connection between the adapter portion 420 and the manifold 430, reducing the connection difficulty between the adapter portion 420 and the manifold 430, and improving the connection quality.

Moreover, by configuring the manifold 430 to be made of a plastic material, the weight of the manifold 430 can be reduced, and the manufacturing cost of the manifold 430 can be lowered.

In some embodiments, the heat exchange tube 410 is a metal member, and the adapter portion 420 is secondarily injection-molded on the heat exchange tube 410 and integrally formed with the heat exchange tube 410. This means that, during the processing and forming of the heat exchanger 400, the heat exchange tube 410 is first formed, and then the adapter portion 420 is integrally injection-molded with the heat exchange tube 410, so as to achieve a mating connection between the adapter portion 420 and the heat exchange tube 410. While reducing the connection difficulty between the adapter portion 420 and the heat exchange tube 410, the connection strength between the adapter portion 420 and the heat exchange tube 410 can be ensured to a certain extent, such that the adapter portion 420 can be stably disposed at one end of the heat exchange tube 410, thereby facilitating the fixed connection of the manifold 430 to the heat exchange tube 410 via the adapter portion 420.

In summary, in one aspect, the adapter portion 420 is secondarily injection-molded on the heat exchange tube 410, such that the adapter portion 420 is integrally formed with the heat exchange tube 410. In another aspect, the adapter portion 420 is fixedly connected to the manifold 430, thereby achieving a mating connection between the manifold 430 and the heat exchange tube 410. This solves the technical problem in the prior art that a metal heat exchange tube 410 and an injection-molded manifold 430 cannot be integrally welded when a plurality of dissimilar materials are involved, and also solves the technical problem of the high cost associated with the connection between the metal heat exchange tube 410 and the injection-molded manifold 430.

Moreover, by integrally injection-molding the adapter portion 420 and the heat exchange tube 410, as compared with welding, adhesive bonding, or snap-fit connection, the sealing performance and pressure resistance at the joint between the adapter portion 420 and the heat exchange tube 410 can be enhanced, thereby achieving communication between the adapter channel 421 and the heat exchange channel 411 and reducing the risk of liquid leakage.

In addition, configuring the heat exchange tube 410 as a metal member is conducive to improving the structural strength of the heat exchange tube 410 and enhancing the heat exchange effect of the heat exchange tube 410, thereby ensuring the operating performance of the heat exchange tube 410 to a certain extent.

The metal member described herein may be an iron member, a copper member, an aluminum member, or the like.

Certainly, in some other embodiments, the heat exchange tube 410 may also be made of a plastic material.

In some embodiments, the adapter portion 420 is a plastic member. That is, the adapter portion 420 is made of a plastic material. In this way, in one aspect, the adapter portion 420 can be secondarily injection-molded on the heat exchange tube 410 and integrally formed with the heat exchange tube 410, thereby reducing the connection difficulty between the adapter portion 420 and the heat exchange tube 410. In another aspect, the weight of the adapter portion 420 can be reduced, and the manufacturing cost of the adapter portion 420 can be lowered.

In some embodiments, a first region is disposed on the outer surface of the heat exchange tube 410, the roughness of the first region is greater than the roughness of the remaining regions, and the first region is in contact with the adapter portion 420. In this way, when the adapter portion 420 is secondarily injection-molded on the heat exchange tube 410 and integrally formed with the heat exchange tube 410, the first region can be utilized to increase the bonding force between the heat exchange tube 410 and the adapter portion 420, thereby increasing the connection strength between the heat exchange tube 410 and the adapter portion 420, such that the adapter portion 420 can be stably disposed on the heat exchange tube 410, thus facilitating the fixed connection of the manifold 430 to the heat exchange tube 410 via the adapter portion 420.

Moreover, by stably disposing the adapter portion 420 on the heat exchange tube 410, the structural stability of the heat exchanger 400 can be improved, thereby ensuring the operating performance of the heat exchanger 400 to a certain extent.

The first region described herein may be understood as a region of the heat exchange tube 410 proximal to an end portion. Between two end portion regions, the heat exchange tube 410 is further provided with a second region, which may be understood as the remaining region of the heat exchange tube 410. By configuring the roughness of the first region to be greater than the roughness of the remaining region, when the first region is in contact with the adapter portion 420, the bonding force between the heat exchange tube 410 and the adapter portion 420 can be increased, thereby increasing the connection strength between the heat exchange tube 410 and the adapter portion 420.

In some embodiments, the heat exchange tube 410 is made of a metallic material, and the first region of the heat exchange tube 410 is roughened to increase the roughness of the first region, thereby enabling the roughness of the first region to be greater than the roughness of the remaining region.

The roughness value of the first region is not specifically limited herein, and a higher roughness value is preferred.

Certainly, in some other embodiments, a plurality of protrusions and/or a plurality of grooves may be disposed in the first region. The cooperation of the plurality of protrusions and/or the plurality of grooves can increase the roughness of the first region, thereby enabling the roughness of the first region to be greater than the roughness of the remaining regions and increasing the bonding force between the heat exchange tube 410 and the adapter portion 420.

In some embodiments, the blocking member 440 is disposed between the adapter portion 420 and the heat exchange tube 410, and the adapter portion 420 is secondarily injection-molded around the blocking member 440 and the heat exchange tube 410, thereby integrally forming the adapter portion 420, the blocking member 440, and the heat exchange tube 410. It can be understood that, when the blocking member 440 is disposed between the adapter portion 420 and the heat exchange tube 410, during assembly of the heat exchanger 400, the blocking member 440 and the heat exchange tube 410 may first be formed and connected in place, and subsequently the adapter portion 420 is integrally injection-molded with the heat exchange tube 410 and the blocking member 440, so as to secondarily injection-mold the adapter portion 420 around the blocking member 440 and the heat exchange tube 410, thereby achieving a mating connection among the adapter portion 420, the heat exchange tube 410, and the blocking member 440. While reducing the connection difficulty among the adapter portion 420, the heat exchange tube 410, and the blocking member 440, the connection strength among the adapter portion 420, the heat exchange tube 410, and the blocking member 440 can be ensured to a certain extent, such that the adapter portion 420 can be stably disposed at one end of the heat exchange tube 410, thereby facilitating the mating communication between the adapter channel 421 and the heat exchange channel 411. This is further conducive to achieving, via the adapter portion 420, the mating connection between the heat exchange tube 410 and the manifold 430, reducing the mating connection difficulty between the heat exchange tube 410 and the manifold 430, and ensuring the operating performance of the heat exchanger 400 to a certain extent.

In some embodiments, with reference to FIGs. 4, 8, and 9, the adapter portion 420 includes an outer sleeve ring 422 and an adapter plate 423. The outer sleeve ring 422 is sleeved over one end of the heat exchange tube 410, and the adapter plate 423 is disposed in the outer sleeve ring 422. The plurality of adapter channels 421 extend through the adapter plate 423. The outer sleeve ring 422 and/or the adapter plate 423 are secondarily injection-molded on the heat exchange tube 410. This means that when the adapter portion 420 is secondarily injection-molded on the heat exchange tube 410, the outer sleeve ring 422 may be secondarily injection-molded on the heat exchange tube 410; or the adapter plate 423 may be secondarily injection-molded on the heat exchange tube 410; or both the outer sleeve ring 422 and the adapter plate 423 may be secondarily injection-molded on the heat exchange tube 410, so as to achieve an injection-molding fit between the adapter portion 420 and the heat exchange tube 410, thereby reducing the connection difficulty between the adapter portion 420 and the heat exchange tube 410 and enhancing the sealing performance and pressure resistance at the joint between the adapter portion 420 and the heat exchange tube 410.

In some embodiments, the outer sleeve ring 422 is sleeved over one end of the heat exchange tube 410 and is in injection-molding fit with the heat exchange tube 410, and the adapter plate 423 is secondarily injection-molded on the blocking member 440. In this way, an injection-molding fit among the adapter portion 420, the heat exchange tube 410, and the blocking member 440 is achieved, and meanwhile, the injection molding difficulty of the adapter portion 420 with the heat exchange tube 410 and the blocking member 440 can be further reduced.

In a specific example, the outer sleeve ring 422 is sleeved over the first region. While enabling the adapter portion 420 to be disposed at one end of the heat exchange tube 410, the connection difficulty between the adapter portion 420 and the heat exchange tube 410 can be reduced, and the connection strength between the adapter portion 420 and the heat exchange tube 410 is increased.

In some other embodiments, the side wall of the heat exchange channel 411 inside the heat exchange tube 410 that is not required to be filled with the cooling medium may be roughened. During the injection molding of the adapter portion 420, the adapter portion 420 is brought into contact with the side wall of the heat exchange channel 411 inside the heat exchange tube 410 that is not required to be filled with the cooling medium. In this way, an injection-molding fit between the adapter portion 420 and the heat exchange tube 410 can be achieved, and the fitting strength can be improved.

That is, the structure is not limited to sleeving the outer sleeve ring 422 over the heat exchange tube 410.

In a specific example, with reference to FIGs. 4, 8, and 9, the adapter portion 420 is provided with a thin-walled structure to form the outer sleeve ring 422. The outer sleeve ring 422 is connected to one end of the heat exchange tube 410. Regions through which the heat exchange medium is required to flow are disposed as through holes to form the adapter channels 421, while other regions are solid to form the adapter plate 423.

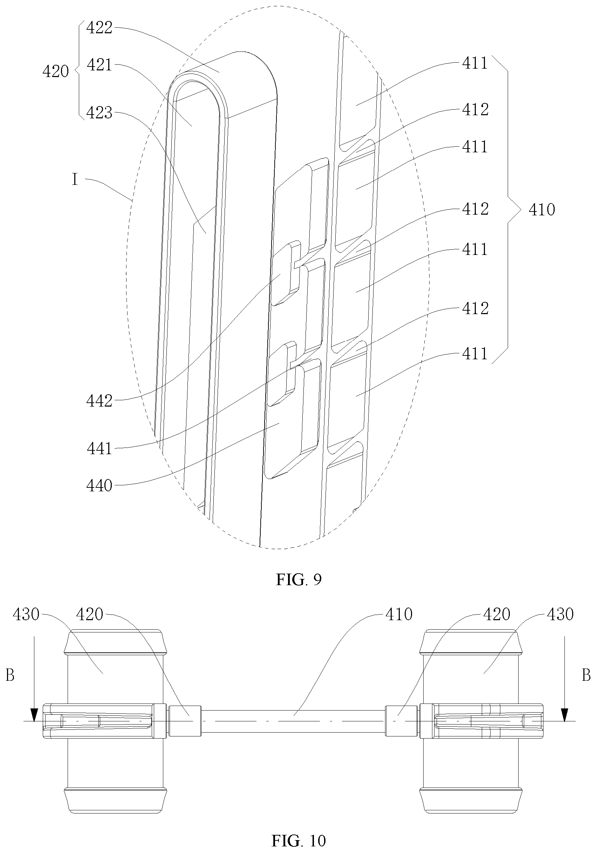

In some embodiments, with reference to FIGs. 9, 10, and 11, the blocking member 440 is disposed in and blocks the heat exchange channel 411, and part of the blocking member 440 extends out of the heat exchange channel 411, such that at least part of the blocking member 440 protrudes beyond the heat exchange channel 411. This means that when the blocking member 440 is disposed in the heat exchange tube 410 to block the heat exchange channel 411, part of the blocking member 440 extends out of the heat exchange channel 411. In one aspect, this facilitates assembly and disassembly of the blocking member 440; in another aspect, it is conducive to fixing the blocking member 440 via the adapter portion 420, thereby further improving the positional stability of the blocking member 440 and ensuring the operating performance of the blocking member 440 to a certain extent.

In some embodiments, an accommodating groove for accommodating the blocking member 440 is disposed in the adapter plate 423. In this way, the part of the blocking member 440 extending out of the heat exchange channel 411 can be assembled in the accommodating groove of the adapter plate 423, thereby enabling the blocking member 440 to be fixed via the adapter plate 423. That is, the blocking member 440 is fixed via the adapter portion 420, thereby improving the positional stability of the blocking member 440, and ensuring the operating performance of the blocking member 440 to a certain extent.

In summary, the adapter portion 420 according to the present application is designed with an accommodating groove to provide clearance for the blocking member 440. In this way, when the adapter portion 420 is secondarily injection-molded on the heat exchange tube 410, the adapter portion 420 can be simultaneously connected to the heat exchange tube 410 and the blocking member 440, improving the positional stability of the blocking member 440, and thereby achieving partial blocking of the heat exchange tube 410.

In a specific example, during assembly of the heat exchanger 400, the blocking member 440 may first be disposed on the heat exchange tube 410 (for example, the blocking member 440 is driven by means of an external driving member and the blocking member 440 is pushed into the heat exchange channel 411). Subsequently, the blocking member 440 and the heat exchange tube 410 are used as inserts and integrally injection-molded with the adapter portion 420, and the adapter portion 420 is then secondarily injection-molded around the blocking member 440 and the heat exchange tube 410, so as to achieve a mating connection among the adapter portion 420, the blocking member 440, and the heat exchange tube 410, thereby enabling the blocking member 440 to block part of the heat exchange channel 411 of the heat exchange tube 410.

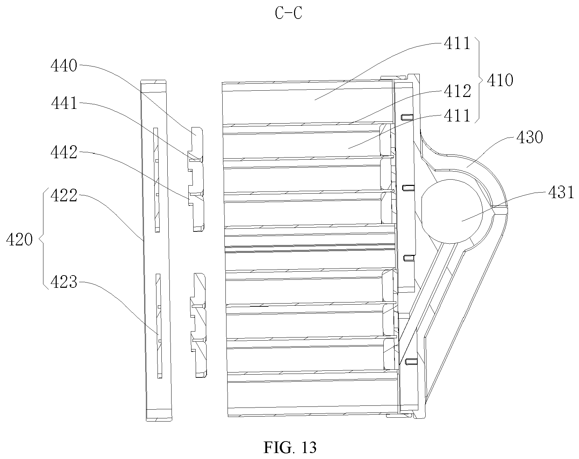

In some embodiments, with reference to FIGs. 12 and 13, the blocking member 440 is formed as a block having a shape conforming to the heat exchange channel 411 to be blocked. The block is fitted at an end portion of the heat exchange channel 411, thereby enabling the blocking member 440 to be disposed in the heat exchange tube 410 to block at least one heat exchange channel 411, and reducing the assembly difficulty of the blocking member 440.

The block may be in an interference fit with the heat exchange channel 411 to increase the connection strength between the block and the heat exchange channel 411, such that the block can be stably disposed in the heat exchange channel 411, thereby enhancing the blocking effect of the blocking member 440.

It should be noted that the block described herein may be a metal block or a plastic block.

In some embodiments, in the length direction of the heat exchange channel 411, the contact length between the block and the heat exchange channel 411 is greater than 10 mm, so as to further increase the connection strength between the block and the heat exchange channel 411, such that the block can be stably disposed in the heat exchange channel 411, thereby enhancing the blocking effect of the blocking member 440.

It should be noted that when a plurality of heat exchange channels 411 need to be blocked, a plurality of adjacent heat exchange channels 411 may be blocked, such that a single blocking member 440 can be used to simultaneously block the plurality of heat exchange channels 411, thereby reducing the difficulty of blocking the plurality of heat exchange channels 411.

Certainly, a plurality of blocking members 440 may be provided, and the plurality of blocking members 440 are in one-to-one correspondence with the plurality of heat exchange channels 411 to be blocked, such that the heat exchange channels 411 can be blocked by the blocking members 440. Moreover, a single blocking member 440 can be used to block some of the heat exchange channels 411.

In addition, when a plurality of blocking members 440 are provided, adjacent blocking members 440 may be independent from each other or may be cooperatively connected.

In some embodiments, with reference to FIGs. 5, 8, and 9, a plurality of partition ribs 412 are disposed in the heat exchange tube 410 for dividing the plurality of heat exchange channels 411. This means that the plurality of partition ribs 412 are disposed in the heat exchange tube 410, and the plurality of partition ribs 412 are configured to divide the interior of the heat exchange tube 410 into a plurality of heat exchange channels 411, thereby reducing the forming difficulty of the plurality of heat exchange channels 411. Moreover, the plurality of partition ribs 412 may cooperate to support the heat exchange tube 410, which facilitates the improvement in the structural strength and the structural stability of the heat exchange tube 410, ensures the operating performance of the heat exchange tube 410 to a certain extent, and facilitates the extension of the service life of the heat exchange tube 410.

Optionally, with reference to FIGs. 8 and 9, the blocking member 440 is provided with at least one insertion slot 441, and at least one partition rib 412 is inserted into the insertion slot 441, such that the blocking member 440 is positioned in the heat exchange tube 410 and blocks the heat exchange channel 411. In this way, while enabling the blocking member 440 to be disposed in the heat exchange tube 410 to block at least one heat exchange channel 411, the fitting difficulty between the blocking member 440 and the heat exchange tube 410 can be reduced, and the fitting quality is improved, such that the blocking member 440 can be stably disposed in the heat exchange channel 411, thereby enhancing the blocking effect of the blocking member 440.

In some embodiments, with reference to FIGs. 8 and 9, a limiting protrusion 442 is disposed on the side wall of the blocking member 440, and the limiting protrusion 442 is adapted to be in contact with end surfaces of the partition rib 412 and/or the heat exchange tube 410, so as to define the length of the portion of the blocking member 440 located in the heat exchange channel 411. The limiting protrusion 442 is in contact with the end surface of the partition rib 412; or the limiting protrusion 442 is in contact with the end surface of the heat exchange tube 410; or the limiting protrusion 442 is simultaneously in contact with the end surface of the partition rib 412 and the end surface of the heat exchange tube 410, enabling the length of the portion of the blocking member 440 located in the heat exchange channel 411 to be defined. This, to a certain extent, avoids the situation where the blocking member 440 fails to block the end portion opening of the heat exchange channel 411 (that is, this prevents part of the heat exchange medium from filling the end opening of the heat exchange channel 411), thereby enhancing the blocking effect of the blocking member 440 and facilitating reduction of the weight of the heat exchanger 400.

In some embodiments, the limiting protrusion 442 is in contact with the adapter plate 423, so as to achieve a contact fit between the blocking member 440 and the adapter portion 420, thereby facilitating the support of the blocking member 440 via the adapter portion 420, improving the positional stability of the blocking member 440, and ensuring the blocking effect of the blocking member 440 to a certain extent.

In some embodiments, as shown in FIG. 3, the collection ports 431 of the manifolds 430 located at two ends of the heat exchange tube 410 are at the same height. This facilitates connection between the collection ports 431 at two ends of the heat exchange tube 410 and external elements, reducing connection difficulty, thereby facilitating the delivery of the heat exchange medium toward the heat exchange tube 410 via the collection ports 431 or the output of the heat exchange medium from the heat exchange tube 410 via the collection ports 431, such that the heat exchange medium can effectively flow in the heat exchange tube 410, and the heat exchange effect of the heat exchange tube 410 is ensured to a certain extent.

In some embodiments, when the heat exchanger 400 is applied to the battery apparatus 100, a surface of the heat exchange tube 410 perpendicular to the thickness direction thereof may be configured to be in contact with the battery cell assembly 120, so as to facilitate heat exchange between the heat exchanger 400 and the battery cell assembly 120.

Moreover, the heat exchange tube 410 can also provide stable support, restraint, and deformation resistance for the battery cell assembly 120.

In some embodiments, the battery apparatus 100 includes a plurality of battery cell assemblies 120 and a plurality of heat exchangers 400. The plurality of battery cell assemblies 120 are arranged in a plurality of rows, and each row of battery cell assemblies 120 is disposed between two adjacent heat exchangers 400. In this way, two heat exchangers 400 can be simultaneously used to exchange heat with the battery cell assemblies 120, so as to ensure the heat exchange effect of the heat exchangers 400 to a certain extent, thereby maintaining the temperature of the battery cell assemblies 120 within an appropriate temperature range, extending the service life of the battery cell assemblies 120 and improving the operational safety of the battery cell assemblies 120.

Optionally, two sides of the battery cell assembly 120 abut against two adjacent heat exchangers 400, respectively, such that heat exchange can be performed on two sides of the battery cell assembly 120, thereby further enhancing the heat exchange effect of the battery cell assembly 120. Moreover, the plurality of battery cell assemblies 120 and the plurality of heat exchangers 400 can mutually abut and support each other, so as to improve the positional stability of the plurality of battery cell assemblies 120 and the plurality of heat exchangers 400, thereby ensuring the structural stability of the battery apparatus 100 to a certain extent and enhancing the operating performance of the battery apparatus 100.

In some embodiments, the battery apparatus 100 further includes a connecting tube (not shown in the figures), which is configured to communicate adjacent heat exchangers 400. In this way, a heat exchange medium can be simultaneously delivered to the plurality of heat exchangers 400, thereby reducing the circulation difficulty of the heat exchange medium in the plurality of heat exchangers 400.

The structural form of the connecting tube is not limited, and the connecting tube may be a single tube or may be formed by splicing a plurality of tubes.

An electric device 1000 according to the embodiments of the present application is described below with reference to the drawings of the specification.

With reference to FIGs. 1 and 2, the electric device 1000 according to the embodiments of the present application includes the battery apparatus 100 described in the above embodiments, and the battery apparatus 100 is configured to provide electric energy.

Since the battery apparatus 100 according to the embodiments of the present application has the above technical effects, the electric device 1000 according to the embodiments of the present application also has the above technical effects. That is, by adopting the battery apparatus 100 according to the present application, the operating performance of the electric device 1000 can be ensured to a certain extent, the operational safety of the electric device 1000 can be improved, and the service life of the electric device 1000 can be extended.

It can be understood that other configurations and operations of the battery apparatus 100 and the electric device 1000 according to the embodiments of the present application are known to those of ordinary skill in the art and will not be described in detail herein.

It should be noted that in the absence of conflicts, the embodiments and features in the embodiments of the present application may be combined with each other.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A battery apparatus, comprising:
a case (110);
a battery cell assembly (120), the battery cell assembly (120) being disposed in the case (110); and
a heat exchanger (400), the heat exchanger (400) being disposed in the case (110), and the heat exchanger (400) being configured to exchange heat with the battery cell assembly (120), wherein the heat exchanger (400) comprises:
a heat exchange tube (410), the heat exchange tube (410) comprising a plurality of heat exchange channels (411);
an adapter portion (420), the adapter portion (420) being sleeved over one end of the heat exchange tube (410), and the adapter portion (420) being provided with a plurality of adapter channels (421); and
a manifold (430), the manifold (430) being fixed to the adapter portion (420), and the manifold (430) being provided with a collection port (431) and at least one flow guiding channel (435), wherein the collection port (431) is in communication with at least one of the heat exchange channels (411), and at least two of the heat exchange channels (411) are in communication with each other via the flow guiding channel (435) and the adapter channel (421) to define a heat exchange loop (450) having at least one turning portion (451).

2. The battery apparatus according to claim 1, wherein the plurality of adapter channels (421) are in communication with the plurality of heat exchange channels (411) in a one-to-one correspondence manner, and the flow guiding channel (435) is in communication with at least two of the adapter channels (421) in a corresponding manner, such that the at least two of the heat exchange channels (411) are in communication with each other via the flow guiding channel (435) to define the heat exchange loop (450) having at least one turning portion (451).

3. The battery apparatus according to claim 2, wherein the adapter portion (420) and the manifold (430) are disposed at each of two ends of the heat exchange tube (410); and each manifold (430) comprises a communication channel (433) in communication with the collection port (431), the flow guiding channel (435) is independent of and not in communication with the communication channel (433), and each flow guiding channel (435) is provided with two bypass holes (4351) spaced apart from each other;
the communication channel (433) of each manifold (430) is in communication with one of the heat exchange channels (411) via the adapter channel (421); and
each flow guiding channel (435) of each manifold (430) is in communication with two of the heat exchange channels (411) via the two bypass holes (4351), such that the two of the heat exchange channels (411) are in communication with each other, and the turning portion (451) is formed between the heat exchange channel (411) and the flow guiding channel (435).

4. The battery apparatus according to any one of claims 1 to 3, wherein the adapter portion (420) is an injection-molded member, and the manifold (430) is fixedly connected to the adapter portion (420).

5. The battery apparatus according to claim 4, wherein the heat exchange tube (410) is a metal member, and the adapter portion (420) is secondarily injection-molded on the heat exchange tube (410) and integrally formed with the heat exchange tube (410).

6. The battery apparatus according to claim 5, wherein the adapter portion (420) is a plastic member.

7. The battery apparatus according to any one of claims 5 to 6, wherein a first region is disposed on an outer surface of the heat exchange tube (410), a roughness of the first region being greater than a roughness of the remaining regions, and the first region being in contact with the adapter portion (420).

8. The battery apparatus according to any one of claims 4 to 7, wherein the adapter portion (420) comprises an outer sleeve ring (422) and an adapter plate (423), the outer sleeve ring (422) is sleeved over one end of the heat exchange tube (410), the adapter plate (423) is disposed in the outer sleeve ring (422), the plurality of adapter channels (421) extend through the adapter plate (423), and the outer sleeve ring (422) and/or the adapter plate (423) are secondarily injection-molded on the heat exchange tube (410).

9. The battery apparatus according to any one of claims 4 to 8, wherein the adapter portion (420) and the manifold (430) are connected by welding or adhesive bonding.

10. The battery apparatus according to claim 9, wherein the manifold (430) is a plastic member.

11. The battery apparatus according to any one of claims 1 to 10, wherein collection ports (431) of the manifolds (430) located at two ends of the heat exchange tube (410) are at the same height.

12. The battery apparatus according to any one of claims 1 to 11, wherein the battery apparatus comprises a plurality of the battery cell assemblies (120) and a plurality of the heat exchangers (400), the plurality of battery cell assemblies (120) being arranged in a plurality of rows, and each row of the battery cell assemblies (120) being disposed between two adjacent heat exchangers (400).

13. An electric device, comprising the battery apparatus according to any one of claims 1 to 12, wherein the battery apparatus is configured to provide electric energy.
